# FASCICULE DE BREVET EUROPEEN

(11) **EP 1 227 057 B1**
(45) Date de publication et mention de la délivrance du brevet: **07.01.2004**
(21) Numéro de dépôt: 02290208.4
(22) Date de dépôt: 30.01.2002
(51) Int. Cl.: B67B 7/46

(54) **Coupe-capsules**
Schneidvorrichtung für Flaschenhalskapseln
Bottle seal cutter

(30) Priorité: 30.01.2001 ES 200100220
(43) Date de publication de la demande: 31.07.2002
(73) Titulaire: B. Olaneta Y Juaristi, S.A., 20600 Eibar, Guipuzcoa (ES)
(72) Inventeur: Olaneta, Santiago, 20600 Eibar Guipuzcoa (ES)
(74) Mandataire: Orian, Yvette Suzanne

(56) Documents cités:
- US-A- 2 142 695
- US-A- 4 845 844
- US-A- 5 372 054

## Description

Dans l'embouteillage des vins, il est habituel de protéger la fermeture au moyen d'une capsule laminaire, laquelle se monte rétractée ou comprimée sur l'embouchure de la bouteille et sur une partie du goulot, après le bouchage.

Ceci implique que, pour le débouchage des bouteilles, il est nécessaire de retirer préalablement ladite capsule laminaire protectrice, ou du moins la partie de cette capsule qui recouvre l'embouchure, pour pouvoir retirer le bouchon.

L'opération de décapsulage, compris dans ce sens, peut se faire avec un outil de coupe quelconque tel qu'un couteau ou analogue mais, dans les activités dans lesquelles on pratique le débouchage quasi continu de nombreuses bouteilles, ce mode de décapsulage se révèle laborieux et peu pratique.

Une solution déjà connue à ce sujet consiste à incorporer une petite lame, en forme de couteau, dans les tire-bouchons ; mais cette solution n'est pas applicable à tous les tire-bouchons et, en outre la manipulation pour la coupe des capsules reste compliquée et laborieuse.

On a aussi développé des outils coupe-capsules spécifiques pour cette fonction mais ces outils sont à actionnement manuel, ce qui, dans tous les cas, exige un effort et de l'habileté de la part de l'usager et, de plus, ils constituent des objets indépendants qui, à l'occasion, peuvent être difficiles à retrouver lorsqu'on a à les utiliser.

Un outil coupe capsule destiné à être fixé à un mur et conforme au préambule de la revendication 1, est décrit dans le document US 2 142 695 A.

Selon la présente invention, on propose une solution plus pratique qui consiste dans un coupe-capsules réalisé selon des caractéristiques constructives et fonctionnelles essentiellement avantageuses pour la fonction du décapsulage, divulguées dans la revendication 1.

On obtient ainsi un coupe-capsules qui se monte fixé à un mur, de sorte que sa disponibilité est immédiate sans qu'on ait de problème pour le trouver afin de l'utiliser.

D'autre part, ledit coupe-capsules présente un fonctionnement mécanique, de sorte que l'usager a seulement à mettre la bouteille en place et à presser la carcasse extérieure du dispositif, ce dispositif exécutant automatiquement la coupe de la capsule protectrice de la bouteille, au moyen de cette simple action.

Ladite coupe de la capsule protectrice des bouteilles est ainsi rapide et pratiquement sans effort de la part de l'usager, lequel n'est en outre exposé à aucun risque de coupure accidentelle aux mains et n'a pas besoin d'habileté pour effectuer le décapsulage.

Pour toutes ces raisons, le coupe-capsules objet de l'invention précité est certainement pourvu de caractéristiques très avantageuses, en acquérant ainsi une vie propre et un caractère préférentiel comparativement aux moyens connus qu'on utilise pour la même fonction.

Les revendications 2 à 5 divulguent d'autres modes de réalisation avantageux.

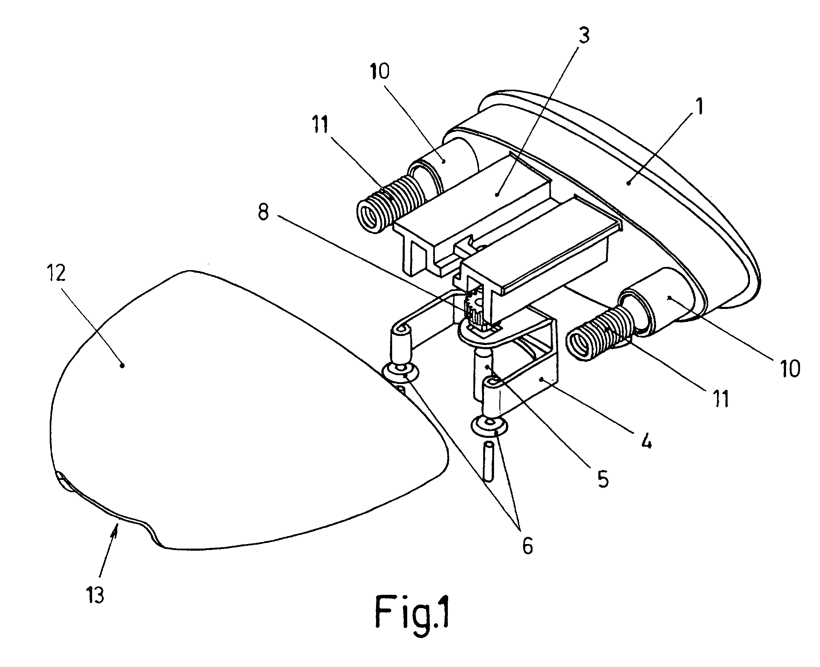

La figure 1 montre en perspective un démontage éclaté de l'ensemble du coupe-capsules selon l'invention.

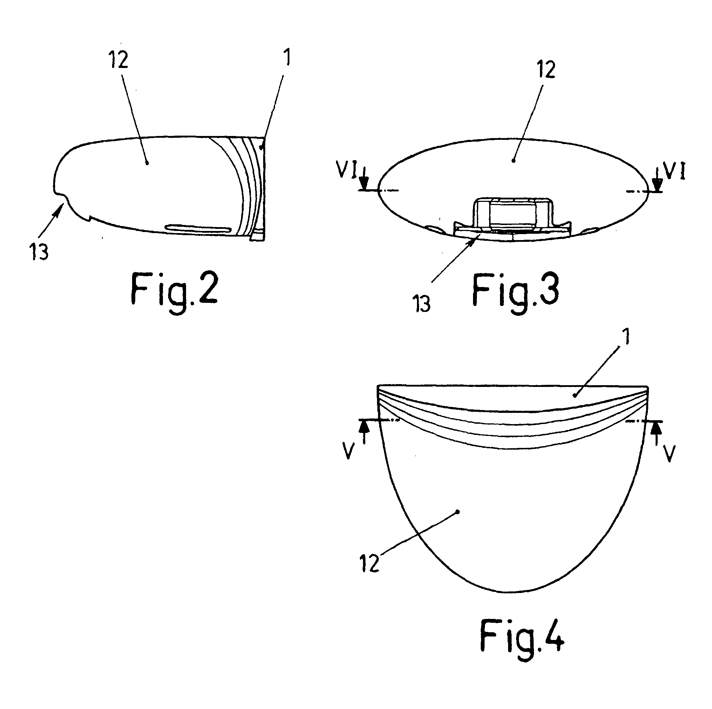

Les figures 2, 3 et 4 sont respectivement des vues de côté, avant et en plan, du coupe-capsules dans la position actionnée pour le décapsulage.
La figure 5 est une coupe agrandie selon la ligne de coupe V-V indiquée sur la figure 4.
La figure 6 est une coupe agrandie selon la ligne de coupe VI-VI indiquée sur la figure 3.

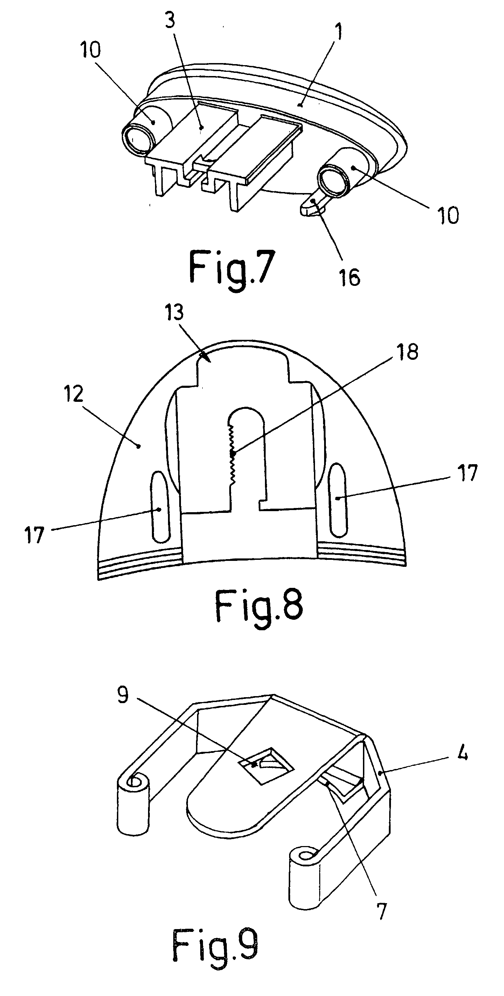

La figure 7 est une vue en perspective indépendante de la pièce de base du coupe-capsules.
La figure 8 est une vue prise de la partie inférieure de la carcasse extérieure du coupe-capsules.
La figure 9 est une vue en perspective indépendante de la structure porte-lames du coupe-capsules.

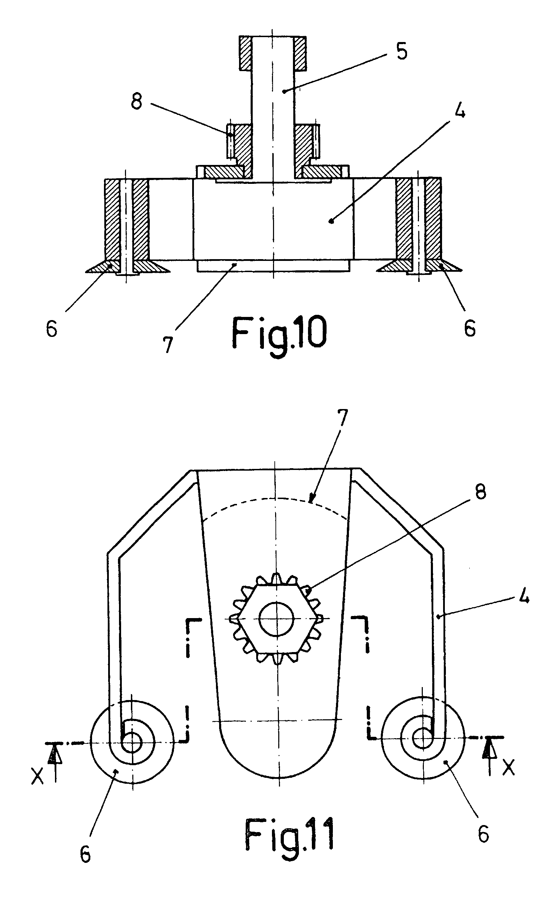

La figure 10 est une vue en coupe transversale du dispositif de coupe du coupe-capsules, selon la ligne de coupe X-X indiquée sur la figure 11.
La figure 11 est une vue en plan dudit dispositif de coupe précité du coupe-capsules.
Les figures 12, 13 et 14 montrent en perspective trois positions successives de la séquence d'utilisation du coupe-capsules au cours du décapsulage d'une bouteille.

L'objet de l'invention est un coupe-capsules destiné à enlever des bouteilles de vin la protection laminaire de la fermeture, au moment où l'on va exécuter le débouchage.

Ledit coupe-capsules comprend une pièce de base (1) laquelle est destinée à se fixer à un mur par vissage à travers des orifices (2).

Cette pièce de base (1) présente une formation (3) proéminente vers l'avant, sur laquelle une structure (4) se fixe dans une disposition rotative au moyen d'une tige verticale (5) qui joue le rôle d'axe.

Ladite structure (4) est d'une forme en « U », avec des branches latérales flexibles, et comprenant, à l'extrémité de ces dernières, des lames circulaires respectives (6), lesquelles se placent, avec leurs bords de coupe opposés face à face à une distance légèrement inférieure au diamètre extérieur normal de l'embouchure des bouteilles de vin ; tandis qu'au fond de la partie intérieure, cette structure (4) forme une butée (7) de forme incurvée.

Il est prévu en supplément sur la structure (4) un pignon denté (8) en disposition axiale par rapport à sa tige (5) de fixation, accouplé solidairement en rotation à ladite structure (4) au moyen d'un encastrement qui correspond à un orifice polygonal (9) de celle-ci, de sorte que la rotation de ce pignon (8) provoque une rotation simultanée de la structure (4) précitée.

Sur les côtés de la formation frontale (3) située au centre, la pièce de base (1) possède en supplément des formations cylindriques creuses (10), également en saillie vers l'avant, dans lesquelles se logent des ressorts (11).

Sur l'ensemble indiqué, se monte une carcasse extérieure (12), en forme de coquille, laquelle présente une ouverture (13) ouverte à partir de l'avant dans la partie inférieure, face à laquelle est placée la structure (4) porteuse des lames (6).

La carcasse extérieure (12) précitée présente, dans la partie arrière, un contour correspondant à la forme du corps de la pièce de base (1), sur laquelle elle s'emboîte avec liberté de coulissement axial, tandis que, dans la partie intérieure, ladite carcasse (12) présente une formation (14), au moyen de laquelle elle établit un accouplement guidé, avec liberté de coulissement par rapport à la formation (3) de la pièce de base (1).

D'autre part, sur les côtés de la formation (14), la carcasse (12) possède aussi des tiges (15) lesquelles s'emboîtent dans les formations cylindriques (10) de la pièce de base (1) en comprimant les ressorts (11) à l'intérieur de celles-ci.

De cette façon, on obtient entre la carcasse extérieure (12) et la pièce de base (1) un accouplement avec liberté de coulissement axial relatif entre elles, ce qui permet le mouvement de la carcasse (12) par rapport à la pièce de base (1) à l'encontre des ressorts (11) qui la repoussent vers l'extérieur.

Le montage de la carcasse (12) par rapport à la pièce de base (1) est assuré par encliquetage au moyen de pattes flexibles (16) à extrémité dentée, solidaires de la pièce de base (1), lesquelles s'emboîtent par rapport à des orifices allongés (17) de la carcasse (12), de sorte qu'il s'établit une retenue qui empêche le démontage, mais qui laisse une liberté de mouvement entre la carcasse (12) précitée et la pièce de base (1) précitée, dans la dimension longitudinale des orifices allongés (17).

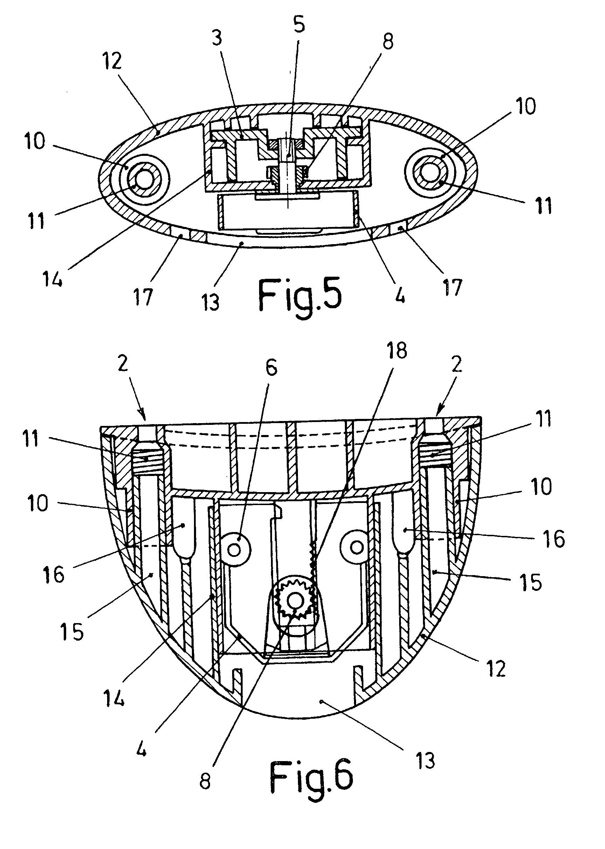

La formation (14) de la carcasse (12) forme dans un côté un bord (18) en forme de crémaillère dentée avec laquelle le pignon (8) engrène, de sorte que le mouvement de la carcasse (12) par actionnement à l'encontre de la poussée des ressorts (11) et le retour à la position initiale sous l'effet de cette poussée lorsqu'on la laisse libre, déterminent la rotation du pignon denté (8) et, par conséquent, de la structure (4). Sur la figure 6, on peut observer une position dans laquelle la carcasse (12) est déplacée à l'encontre de la poussée des ressorts (11) jusqu'à la butée contre la pièce de base (1), la structure (4) étant tournée dans une position inverse de celle de la situation normale de placement face à l'embouchure (13) qui correspond à la position statique de l'ensemble.

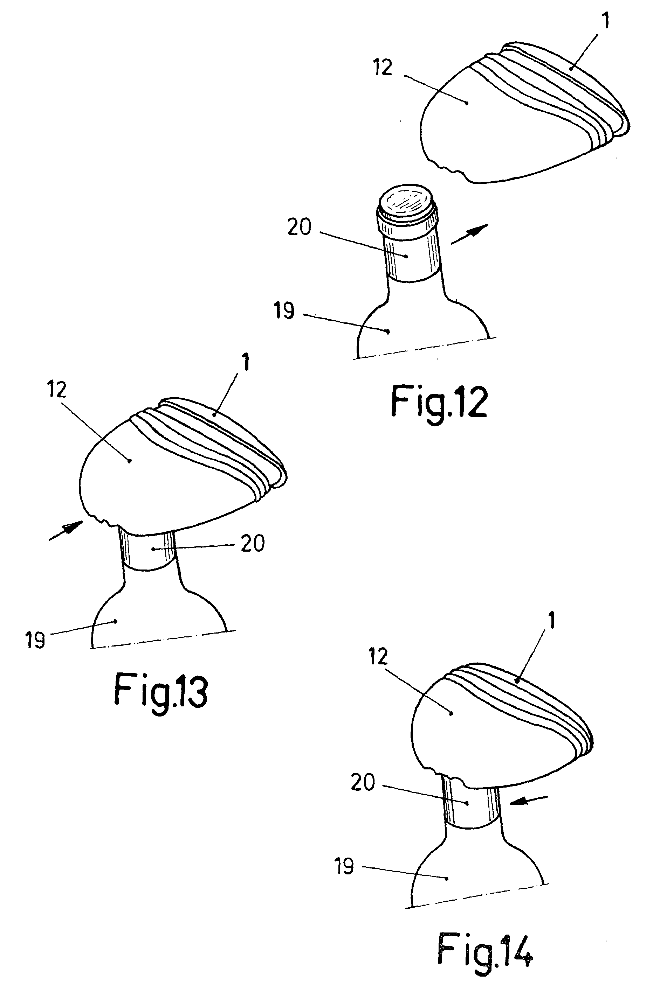

Ainsi, avec tout cela, pour dégager une bouteille (19), on introduit la partie de l'embouchure de ladite bouteille (19) dans l'ouverture (13) du coupe-capsules, comme le montre la figure 12, de sorte que ladite embouchure de la bouteille (19) passe d'une façon un peu forcée entre les lames (6) de la structure (4) et, en venant en butée contre le logement (7) du fond, est positionnée entre ces dernières.

Dans ces conditions, par poussée de la carcasse extérieure (12), dans la mesure de la liberté de cette dernière par rapport à la pièce de base (1), comme l'indique la figure 13, il se produit un actionnement en rotation de la structure (4), de sorte que les lames (6) coupent la capsule linéaire de protection de la fermeture autour de l'embouchure de la bouteille (19).

Une fois ceci exécuté, on peut retirer la bouteille (19) vers l'extérieur, comme l'indique la figure 14, de sorte que, la capsule laminaire (20) étant coupée, la partie de cette dernière qui recouvre l'embouchure peut être retirée sans autre précaution, s'il se produit qu'elle ne tombe pas d'elle-même au cours de l'extraction, l'embouchure restant ainsi libre pour le débouchage.

## Revendications

1. Coupe-capsules pour le décapsulage des bouteilles de vin qui comprennent un recouvrement laminaire protecteur sur l'embouchure, comprenant une pièce de base (1) destinée à se fixer à un mur par vissage, et une structure porte-lames (4), **caractérisé en ce que** la structure porte-lames (4) est en montage rotatif sur ladite pièce de base (1) et, qu'en montage extérieur, est disposée une carcasse (12) qui est en disposition de mouvement relatif de rapprochement et d'éloignement par rapport à la pièce de base (1), ladite carcasse (12) présentant, à partir de l'avant et dans la partie inférieure, une ouverture (13) pour l'introduction d'une partie de l'embouchure de la bouteille (19) à décapsuler, ladite ouverture (13) faisant face à la structure porte-lames (4), avec des moyens placés dans la partie intérieure pour l'actionnement en rotation de ladite structure porte-lames (4) sous l'effet du mouvement de la carcasse (12).

2. Coupe-capsules selon la première revendication, **caractérisé en ce que** la pièce de base (1) et la carcasse extérieure (12) présentent des formations correspondantes (10, 15) entre lesquelles elles forment un accouplement guidé avec liberté de mouvement entre la pièce de base (1) et la carcasse (12), cependant que sont disposés entre les formations correspondantes (10, 15) des ressorts (11) qui agissent dans le sens de l'éloignement.

3. Coupe-capsules selon la première revendication, **caractérisé en ce qu'**entre la pièce de base (1) et la carcasse (12), s'établit un encliquetage de montage au moyen de pattes flexibles (16) à extrémité dentée solidaires de la pièce de base (1), qui s'emboîtent dans des orifices allongés (17) de la carcasse (12) en assurant une retenue qui empêche le démontage, avec liberté de mouvement dans la dimension longitudinale des orifices allongés (17).

4. Coupe-capsules selon la première revendication, **caractérisé en ce que** la structure porte-lames rotative (4) présente une forme en « U » possédant des branches latérales flexibles, en comprenant, à l'extrémité desdites branches, des lames circulaires respectives (6), lesquelles présentent leurs bords de coupe face à face à une distance un peu inférieure au diamètre extérieur normal de l'embouchure des bouteilles de vin, cependant que, dans le fond de la partie intérieure, ladite structure porte-lames (4) forme une butée (7).

5. Coupe-capsules selon la première revendication, **caractérisé en ce qu'**il comprend un pignon denté (8) associé en montage solidairement en rotation à la structure porte-lames (4), cependant que la carcasse (12) présente intérieurement une crémaillère (18) qui engrène avec ledit pignon (8), de sorte que le mouvement de la carcasse (12) par rapport à la pièce de base (1) provoque un actionnement en rotation de la structure porte-lames (4).

## Patentansprüche

1. Kapselschneider für das Entkapseln von Weinflaschen, die eine blattartige Schutzabdeckung auf der Öffnung aufweisen, mit einem Basisteil (1), welches an einer Wand festgeschraubt werden soll und einem Messerhalteraufbau (4), **dadurch gekennzeichnet, dass** der Messerhalteraufbau (4) an dem Basisteil (1) drehangebracht ist und dass außen ein Gehäuse (12) angebracht ist, welches angeordnet ist, um gegenüber dem Basisteil (1) eine relative Annäherungs- und Entfemungsbewegung auszuführen, wobei das Gehäuse (12) ausgehend vom Vorderteil und in dem unteren Teil eine Öffnung (13) für das Einführen eines Teils der Öffnung der zu entkapselnden Flasche (19) aufweist, wobei die Öffnung (13) dem Messerhalteraufbau (4) gegenüber liegt, mit im Innenteil angebrachten Mitteln zum Drehbetätigen des Messerhalteraufbaus (4) unter der Wirkung der Bewegung des Gehäuses (12).

2. Kapselschneider nach dem ersten Anspruch, **dadurch gekennzeichnet, dass** das Basisteil (1) und das Außengehäuse (12) entsprechende Ausbildungen (10, 15) aufweisen, zwischen denen sie eine geführte Kopplung mit Bewegungsfreiheit zwischen dem Basisteil (1) und dem Gehäuse (12) bilden, während zwischen den entsprechenden Ausbildungen (10, 15) Federn (11) angeordnet sind, die im Sinne des Entfemens wirken.

3. Kapselschneider nach dem ersten Anspruch, **dadurch gekennzeichnet, dass** zwischen dem Basisteil (1) und dem Gehäuse (12) eine Montageverrastung mittels flexibler, mit dem Basisteil (1) fest verbundener Laschen (16) mit gezahntem Ende erfolgt, die in langgestreckte Öffnungen (17) des Gehäuses (12) eingreifen und dabei ein Zurückhalten, mit Bewegungsfreiheit in der Längsabmessung der langgestreckten Öffnungen (17), sicherstellen, welches das Auseinandergehen verhindert.

4. Kapselschneider nach dem ersten Anspruch, **dadurch gekennzeichnet, dass** der drehbare Messerhalteraufbau (4) eine U-Form aufweist, welche flexible Seitenschenkel besitzt, wobei am Ende der Schenkel jeweilige kreisförmige Messer (6) enthalten sind, deren gegenüberliegende Schneidränder in einem Abstand angeordnet sind, der etwas geringer ist als der normale Außendurchmesser der Öffnung der Weinflaschen, während der Messerhalteraufbau (4) am Boden des Innenteils einen Anschlag (7) bildet.

5. Kapselschneider nach dem ersten Anspruch, **dadurch gekennzeichnet, dass** er ein kleines Zahnrad (8) enthält, das drehfest angeordnet dem Messerhalteraufbau (4) zugeordnet ist, während das Gehäuse (12) innen eine Zahnleiste (18) aufweist, die mit dem Ritzel (8) in Eingriff ist, so dass die Bewegung des Gehäuses (12) gegenüber dem Basisteil (1) eine Drehbetätigung des Messerhalteraufbaus (4) bewirkt.

## Claims

1. A seal cutter for removing seals from wine bottles having respective protective coverings of sheet material over their mouths, the cutter comprising a base piece (1) for fixing to a wall by screw fastening, and a blade-carrier structure (4), the cutter being **characterized in that** the blade-carrier structure (4) is mounted to rotate on said base piece (1) and, mounted on the outside, there is disposed a cover (12) disposed to move relative to the base piece (1) towards it and away therefrom, said cover (12) presenting an opening (13) extending from its front and in its lower portion, the opening being for insertion of a portion of the mouth of the bottle (19) for unsealing, said opening (13) facing the blade-carrier structure (4) with means placed in the lower portion for actuating said blade-carrier structure (4) in rotation under the effect of the cover (12) moving.

2. A seal cutter according to the first claim, **characterized in that** the base piece (1) and the outer cover (12) present corresponding formations (10, 15) between which they form a guided coupling with freedom of movement between the base piece (1) and the cover (12), with springs (11) being disposed between the corresponding formations (10, 15) and acting to urge them apart.

3. A seal cutter according to the first claim, **characterized in that** assembly snap-fastening takes place between the base piece (1) and the cover (12) by means of flexible tabs (16), with toothed ends, secured to the base piece (1) and having end catches which engage in elongate orifices (17) of the cover (12), providing retention which prevents disassembly, while leaving freedom of movement in the longitudinal direction of the elongate orifices (17).

4. A seal cutter according to the first claim, **characterized in that** the rotary blade-carrier structure (4) is U-shaped, possessing flexible side arms with respective circular blades (6) at the ends of said arms, the blades presenting their cutting edges facing each other at a distance that is slightly smaller than the normal outside diameter of the mouths of wine bottles, with said blade-carrier structure (4) forming an abutment (7) at the end of the inside portion.

5. A seal cutter according to the first claim, **characterized in that** it includes a pinion (8) mounted to rotate with the blade-carrier structure (4), the cover (12) presenting an internal rack (18) which meshes with said pinion (8) so that movement of the cover (12) relative to the base piece (1) drives the blade-carrier structure (4) in rotation.
